(19) Europäisches Patentamt
European Patent Office
Office européen des brevets

(11) **EP 4 701 064 A1**

(12) **EUROPÄISCHE PATENTANMELDUNG**

(43) Veröffentlichungstag:
**25.02.2026   Patentblatt 2026/09**

(21) Anmeldenummer: **24195578.0**

(22) Anmeldetag: **21.08.2024**

(51) Internationale Patentklassifikation (IPC):
**H02M 7/5387** (2007.01)   **H02M 7/5395** (2006.01)
**H02M 1/00** (2006.01)   **H02M 1/32** (2007.01)

(52) Gemeinsame Patentklassifikation (CPC):
**H02M 7/5395; H02M 1/0012; H02M 1/32; H02M 7/5387**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder:
• **Siemens Aktiengesellschaft**
**80333 München (DE)**
• **Karlsruher Institut für Technologie**
**76131 Karlsruhe (DE)**

(72) Erfinder:
• **Hiller, Marc**
**75015 Bretten (DE)**
• **Köllensperger, Peter**
**90562 Heroldsberg (DE)**
• **Liske, Andreas**
**76327 Pfinztal (DE)**
• **Schmitz-Rode, Benedikt**
**76185 Karlsruhe (DE)**
• **Tsotoulidis, Savvas**
**35132 Lamia (GR)**

(74) Vertreter: **Siemens Patent Attorneys**
**Postfach 22 16 34**
**80506 München (DE)**

(54) **DATENBASIERTES CONDITION MONITORING VERFAHREN VON LEISTUNGSELEKTRONISCHEN KOMPONENTEN IN FREQUENZUMRICHTERN BASIEREND AUF SEKTORAUSWERTUNG**

(57)    Die vorliegende Erfindung betrifft ein Computer-implementiertes Verfahren, eine Computerimplementierte Vorrichtung, ein System und ein Computerprogrammprodukt zum Bestimmen eines Degradationsfortschritts eines Stromrichters umfassend ein Erfassen eines zeitlichen Verlaufs eines Ausgangsstroms und/oder einer Ausgangsspannung des Stromrichters und/oder eines Proportional- und/oder Integralteils eines PI-Reglers, wobei der Ausgangsstrom und/oder die Ausgangsspannung zur Zuführung zu einem elektrischen Antriebsmittel bestimmt ist und/oder der PI-Regler zur Regelung des Ausgangsstroms und/oder der Ausgangsspannung des Stromrichters bestimmt ist, ein Ausführen einer Frequenzanalyse und/oder einer Zeit-Frequenz-Analyse basierend auf dem erfassten zeitlichen Verlauf, ein Bestimmen einer für den Degradationsfortschritt indikativen Amplitude einer höheren Harmonischen basierend auf der Frequenzanalyse und/oder einer für den Degradationsfortschritt indikativen Amplitude eines Frequenzbands basierend auf der Zeit-Frequenz-Analyse, ein Vergleichen der bestimmten Amplitude mit einer für einen Degradationsfortschritt des Stromrichters indikativen Referenzamplitude und ein Bestimmen des Degradationsfortschritts des Stromrichters basierend auf dem Vergleichen.

FIG 9A

Fourierkoeffizienten $K_{i,s,6}$ n=500 min$^{-1}$

♦ gesund
□ 75°C
○ 100°C
△ 125°C

$b_6$ in V
$a_6$ in V

**Beschreibung**

Die vorliegende Erfindung betrifft ein Computer-implementiertes Verfahren, eine Computer-implementierte Vorrichtung, ein System sowie ein Computerprogrammprodukt zum Bestimmen eines Degradationsfortschritts eines Stromrichters.

Elektrische Bauteile unterliegen im Allgemeinen einem Alterungsprozess. Diese können z.B. durch wiederholtes Erwärmen und Abkühlen der betreffenden Bauteile im Regelbetrieb verursacht werden, durch im Material der elektrischen Bauteile vorhandene Materialdefekte, etc. Dieser Alterungsprozess führt zu einer in der Regel begrenzten Lebenszeit der betreffenden Bauteile, welche folglich nach einer gewissen Einsatzzeit ausgetauscht werden müssen.

Die verbleibende Lebenszeit von Komponenten in einem elektrischen System (z.B. in einem Stromrichtersystem) kann für einen Anlagenbetreiber häufig schwer zu ermitteln sein. Das Bestimmen einer zu verbleibenden Lebenszeit kann sowohl für einen Hersteller des jeweiligen elektrischen Bauteils als auch für einen Stromrichterentwickler, welcher für eine Implementierung des jeweiligen elektrischen Bauteils zuständig ist, eine Herausforderung darstellen. Hersteller führen diesbezüglich häufig offline Berechnungen durch, um eine zu erwartete Lebenszeit eines Bauteils (z.B. eines Leistungswandlers) zu bestimmen und führen diese dann in ihren Dokumentationen auf. Diese Berechnungen basieren meist auf Lastprofilen und Produktnutzung, wie sie über einen idealen Produktzyklus hinweg auftreten kann, während typische Randbedingungen in Betracht gezogen werden, wie z.B. Temperatur, Feuchtigkeit, Höhe, etc.

Die Ermittlung der verbleibenden Lebenszeit kann z.B. durch eine regelmäßige Wartung der betreffenden Komponenten erfolgen. In einem derartigen Fall können z.B. zwei Wartungsstrategien in Frage kommen. Es ist ggf. möglich, basierend auf den bekannten Lastprofilen und spezifizierten Umgebungsbedingungen Wartungsintervalle festzulegen, zu deren Zeitpunkten die zu wartenden Komponenten mit hoher Wahrscheinlichkeit noch funktionstüchtig sind. Die Wahl dieser Wartungsintervalle kann jedoch häufig dazu führen, dass Komponenten mit ggf. noch beträchtlicher verbliebener Lebenszeit ausgetauscht werden, was zu (unnötig) hohen Kosten und Materialeinsatz führen kann.

Als weitere Wartungsstrategie, falls Stillstandzeiten des elektrischen Systems in Kauf genommen werden können, kann auch ein Austausch der betreffenden Komponente erfolgen, wenn diese auch tatsächlich ausgefallen ist. Dies kann zwar die mit einem zu frühen Austausch verbundenen (unnötigen) Kosten verringern, jedoch kann demgegenüber ein unerwarteter Stillstand des elektrischen Systems erfolgen und dadurch z.B. eine Produktionslinie stilllegen. Je nach dadurch aufgetretenem Defekt kann dies zu unerwartet hohen Kosten führen. Die Auswahl, der für die betreffende Anlage und Applikation optimierten Wartungsintervalle kann zu einer globalen Kostenreduktion und zu einer Minimierung der Stillstandzeit des elektrischen Systems führen.

Durch den Einsatz sog. Condition Monitoring Verfahren kann der Zeitpunkt, wann eine Wartung des elektrischen Systems durchgeführt werden soll, optimiert werden, indem die verbliebene Lebenszeit der elektrischen Komponenten bzw. ein Fortschritt eines aktuellen Degradationsprozesses ermittelt wird.

Condition Monitoring kann dabei in drei unterschiedliche Klassen von Ansätzen unterteilt werden.

Im Rahmen der sensorbasierten Condition Monitoring Systeme kann zusätzliche/dedizierte Sensorik und/oder komplexe Messschaltungen verwendet werden, um direkt Größen eines elektrischen Systems zu messen, welche Rückschlüsse auf einen aktuellen Degradationsfortschritt elektrischer Komponenten ermöglichen. Die Komplexität und auch die Implementierungskosten eines derartigen Systems können dabei deutlich steigen. Unterschieden werden kann weiter zwischen Messsystemen, die online im Betrieb eines Stromrichtersystems eingesetzt werden und externer Prüftechnik, die lediglich in festgelegten (vorbestimmten) Intervallen zur Messung verwendet wird.

Im Rahmen modellbasierter Condition Monitoring Systeme wird versucht, einige der vorstehend genannten Probleme zumindest teilweise durch Modellbildung zu überwinden. In diesen Modellen wird der Alterungsvorgang physikalisch oder stochastisch implementiert. Das Modell wird anschließend online im Betrieb mit Lastprofilen und Umgebungsbedingungen als Eingangsvariablen betrieben. Das Ergebnis kann eine stochastische Bewertung der verbliebenen Lebenszeit bzw. des aktuellen Schweregrads der Schädigung sein. Trotz des Wegfalls zusätzlicher Messschaltungen besteht die Herausforderung dennoch in einem Modellaufbau mit ausreichender Güte.

Datenbasierte Condition Monitoring Systeme können derart eingerichtet sein, aus bestehenden Mess- und Zustandsgrößen Muster, die Rückschlüsse auf die Änderung eines Degradationsindikators ermöglichen und damit Rückschlüsse auf eine eingetretene Alterung ermöglichen. Hierbei kann der Informationsgehalt von verschiedenen möglichen Messsignalen und Zustandsgrößen analysiert werden sowie auf Möglichkeiten der Signalverarbeitung zurückgegriffen werden. Dies kann basierend auf statistischen Methoden erfolgen oder basierend auf Methoden der künstlichen Intelligenz.

Bekannte Condition Monitoring Verfahren ermöglichen jedoch noch nicht unter allen Umständen eine zufriedenstellende Bestimmung eines Degradationsfortschritts, da diese zu komplexe Hardware, eine zu komplexe Modellbildung oder eine aufwendige Datenanalyse erfordern. In einigen Fällen, sind derzeit verwendete Condition Monitoring Verfahren für den Feldeinsatz schlicht zu ungenau.

Es kann möglich sein, das Condition Monitoring eines Stromrichters, z.B. bei Vorliegen eines (elektrischen) Antriebs auf das Erfassen von mechanischen Vibrationen und/oder elektrischer Signale, welche mit dem Betrieb des Antriebs assoziiert sind, zu basieren. Eine Möglichkeit in diesem Zusammenhang kann der Rückgriff auf eine motor current signature analysis (MCSA) sein, welche z.B. angewendet wird, um mechanische Fehler eines Antriebs zu identifizieren, wie z.B. eine Fehlausrichtung, Ungleichgewicht, lockere Füße des Motors, Kavitationseffekte (z.B. bei Pumpen) etc. Dies stützt sich jedoch im Wesentlichen auf die Auswertung mechanischer Parameter und kann daher nicht in allen Fällen eine erwünschte Vorhersagegenauigkeit sicherstellen.

Es besteht daher ein Bedarf ein verbessertes Condition Monitoring Verfahren bereitzustellen, welches die Nachteile und Einschränkungen derzeit verwendeter Condition Monitoring Verfahren zumindest teilweise überwindet.

Die vorliegende Erfindung stellt sich daher die technische Aufgabe ein verbessertes und leicht bzw. kostengünstig zu implementierendes Condition Monitoring Verfahren bereitzustellen.

Dies wird erreicht durch einen ersten Aspekt der Erfindung, welcher sich auf ein Computer-implementiertes Verfahren zum Bestimmen eines Degradationsfortschritts eines Stromrichters bezieht.

Das Computer-implementierte Verfahren umfasst ein Erfassen eines zeitlichen Verlaufs eines Ausgangsstroms und/oder einer Ausgangsspannung des Stromrichters und/oder eines Proportional- und/oder Integralteils eines PI-Reglers, wobei der Ausgangsstrom und/oder die Ausgangsspannung zur Zuführung zu einem elektrischen Antriebsmittel bestimmt ist und/oder der PI-Regler zur Regelung des Ausgangsstroms und/oder der Ausgangsspannung des Stromrichters bestimmt ist sowie ein Ausführen einer Frequenzanalyse und/oder einer Zeit-Frequenz-Analyse basierend auf dem erfassten zeitlichen Verlauf und ein Bestimmen einer für den Degradationsfortschritt indikativen Amplitude einer höheren Harmonischen basierend auf der Frequenzanalyse und/oder einer für den Degradationsfortschritt indikativen Amplitude eines Frequenzbands basierend auf der Zeit-Frequenz-Analyse. Das Verfahren umfasst ein Vergleichen der bestimmten Amplitude mit einer für einen Degradationsfortschritt des Stromrichters indikativen Referenzamplitude sowie ein Bestimmen des Degradationsfortschritts des Stromrichters basierend auf dem Vergleichen.

Unter einem Degradationsfortschritt kann vorliegend ein Voranschreiten eines Alterungsprozesses des Stromrichters (hierin auch als Umrichter bezeichnet) verstanden werden. Ein Voranschreiten der Degradation kann mit einer ansteigenden Ausfallwahrscheinlichkeit des Stromrichters (z.B. durch einen Defekt) assoziiert sein. Der zeitliche Verlauf kann zu vorbestimmten (diskreten) Zeitpunkten erfasst werden und/oder kann kontinuierlich während des Betriebs des Stromrichters erfasst werden.

Der erfasste zeitliche Verlauf kann sich über eine Dauer von weniger als einer Sekunde erstrecken. In einigen Fällen kann such der erfasste zeitliche Verlauf über eine Sekunde bis zehn Sekunden erstrecken, in einigen Fällen über eine Dauer von elf Sekunden bis 30 Sekunden, in weiteren Fällen über eine Dauer von 31 Sekunden bis zu 60 Sekunden. In weiteren Fällen kann sich die Dauer auch über mehrere Minuten erstrecken (z.B., zwei, drei, vier, fünf, zehn, 15, 20, 25, 30, 35, 40, 45, 50, 55 Minuten). Es kann hingegen auch möglich sein, dass sich der zeitliche Verlauf über eine Dauer von mehr als einer Stunde erstreckt oder über mehrere Tage hinweg.

Unter einer Harmonischen kann eine harmonische Schwingung verstanden werden, deren Frequenz ein ganzzahliges Vielfaches einer Grundfrequenz ist. In einigen Fällen kann der erfasste zeitliche Verlauf eine sinusförmige Schwingung umfassen.

In einigen Fällen kann unter einer Zeit-Frequenz-Analyse eine Wavelet-Transformation verstanden werden.

Im Rahmen einer Zeit-Frequenz-Analyse kann es ermöglicht werden, abrupte Änderungen im erfassten zeitlichen Verlauf zu bestimmen, um frühzeitig auf eine Degradation des Stromrichters schließen zu können.

Die Referenzamplitude kann auf einem vorangegangenen Bestimmen eines Degradationsfortschritts eines (baugleichen) Stromrichters und einer damit einhergehenden Amplitude basieren. In einigen Fällen kann die Referenzamplitude aus einem vorangegangenen, systematischen Abbilden von unterschiedlichen Degradationsfortschritten für (baugleiche) Stromrichter basierend auf entsprechenden Amplituden hervorgehen. In einigen Fällen, kann die Referenzamplitude zumindest teilweise durch Verwenden eines neuronalen Netzes bestimmt werden (z.B. in dem dieses eine Referenzamplitude bestimmt, bei deren Erreichen mit einer vorbestimmten Wahrscheinlichkeit z.B. ein Ausfall des Stromrichters anzunehmen ist).

In einigen Fällen kann das Bestimmen eines Degradationsfortschritts nicht nur als eine absolute Feststellung (nämlich, dass eine Degradation eingetreten ist) erfolgen, sondern insbesondere kann auch eine z.B. stufenweise Feststellung erfolgen, wie weit der Degradationsfortschritt bereits fortgeschritten ist. Auf diese Weise kann z.B. eine Aussage dahingehend erfolgen, dass der Stromrichter z.B. 10 %, 20 %, 30 %, 40 %, 50 %, 60 %, 70 %, 80 %, 90 %, 99 % seiner erwarteten Lebenszeit bereits erreicht hat, was als Ausgangspunkt dafür benutzt werden kann zu entscheiden, ob ein Austausch des Stromrichters erfolgen soll.

Das Computer-implementierte Verfahren kann insbesondere ohne die Verwendung weiterer, im Normalbetrieb des Stromrichters per se nicht verwendeter Sensoren ausgeführt werden. Auf diese Weise kann das Computer-implementierte Verfahren auch für das datenbasierte Condition Monitoring von bereits ausgelieferten Stromrichtern (z.B. durch ein Softwareupdate) kostengünstig nachgerüstet werden. Des Weiteren ist es möglich, neu hergestellte Stromrichter mit dem Computer-implementierten Verfahren ohne zusätzlichen Kostenaufwand auszustatten, da keine für das Computer-implementierte Verfahren dedizierte Messelektronik erforderlich ist. Somit kann ein kostengünstiges Condition Monitoring Verfahren weiter unterstützt werden. Insbesondere kann das Bestimmen eines Degradationsfortschritts somit basierend auf Prozessparametern erfolgen, welche während des Betriebs des Stromrichters bereits anfallen und nicht mehr dediziert im Rahmen des Computer-implementierten Verfahrens erzeugt werden müssen. Somit werden etwaige im Speziellen zu erzeugende Überwachungssignale entbehrlich, was sich in einer Komplexitätsreduktion des zu überwachenden Stromrichters bemerkbar machen kann. Auf diese Weise kann ein vereinfachtes, kostengünstiges Überwachen des Degradationsfortschritts ermöglicht werden.

In einer Ausführungsform umfasst das Ausführen der Frequenzanalyse ein Ausführen einer Fast Fourier Transform-, FFT-, Analyse.

In einigen Beispielen kann das erfasste Signal mit einer Abtastrate erfasst werden, welche zumindest das Nyqvist-Kriterium erfüllt, d.h. die Abtastrate wird so gewählt, dass sie zumindest der doppelten Frequenz des zu erfassenden Signals entspricht. In einigen Fällen kann die Abtastrate jedoch auch so gewählt werden, dass sie mehr als der doppelten Frequenz des höchstfrequenten abzutastenden Signals entspricht. In letzterem Fall liegt eine sog. Überabtastung vor.

Das Ausführen einer FFT-Analyse kann eine Zerlegung des erfassten Signals in seine einzelnen Frequenzkomponenten ermöglichen (z.B. in Form einer Darstellung des transformierten Signals als Amplitude vs. Frequenz). Somit können die einzelnen Frequenzbestandteile des erfassten Signals analysiert werden. Insbesondere kann eine FFT-Transformation ein Darstellen eines erfassten Signals f(t) durch dessen Sinus- und Cosinus-Anteile umfassen, gemäß

$$f(t) \sim \frac{a_0}{2} + \sum_{k=1}^{\infty} \left( a_k \cos\left(\frac{2\pi}{T} kt\right) + b_k \sin\left(\frac{2\pi}{T} kt\right) \right)$$

.

Gleichung 1

Hierbei beschreiben $a_k$ und $b_k$ die im Rahmen der FFT-Transformation zu bestimmenden Fourierkoeffizienten, $a_0$ einen Gleichanteil der FFT-Transformation, T eine Periodendauer eines betrachteten Signals und k einen Wellenvektor einer Komponente des erfassten Signals. Durch Summenbildung über die Laufvariable k kann aus den einzelnen Cosinus bzw. Sinusbestandteilen das ursprünglich erfasste Signal f(t) angenähert werden.

In einer weiteren Ausführungsform kann das Bestimmen des Degradationsfortschritts ein Bestimmen umfassen, dass die bestimmte für den Degradationsfortschritt indikative Amplitude kleiner ist als die Referenzamplitude, bevorzugt um mehr als einen vorbestimmten Schwellenwert.

In einigen Fällen kann die Referenzamplitude um 5% bis 95%, bevorzugter um 10% bis 75%, noch bevorzugter um 15% bis 55% und am meisten bevorzugt um 20% bis 50% kleiner sein als die bestimmte für den Degradationsfortschritt indikative Amplitude. Jeder der zuvor genannten Intervalle bzw. der Intervallgrenzen kann als ein vorbestimmter Schwellenwert fungieren.

In einigen Fällen kann es jedoch sein, dass die Referenzamplitude größer ist als die bestimmte für den Degradationsfortschritt indikative Amplitude. In einem derartigen Fall kann daher die bestimmte für den Degradationsfortschritt indikative Amplitude bei einem Voranschreiten der Degradation auch zunehmen. Die hierin beschriebenen Aspekte, welche für eine Abnahme der Amplitude bei Voranschreiten der Degradation beschrieben werden, können daher auch, *mutatis mutandis,* auf das Szenario angewandt werden, in welchem eine Zunahme der Amplitude erfolgt.

Unter einer Amplitude kann vorliegend der Wert eines Fourierkoeffizienten verstanden werden, welcher im Rahmen einer FFT-Transformation erhalten werden kann. Alternativ kann unter einer Amplitude auch die Magnitude einer Frequenzanalyse verstanden werden, welche z.B. auf den Fourierkoeffizienten $a_k$ und $b_k$ basieren kann, z.B. durch Bilden eines Betragsquadrats.

Durch Bestimmen, dass die für den Degradationsfortschritt indikative Amplitude kleiner ist als eine Referenzamplitude kann ein zuverlässiges Bestimmen ermöglicht werden, ob ein Degradationsfortschritt eines Stromrichters bereits eine kritische Degradation überschritten hat, die z.B. einen Tausch des Stromrichters erforderlich machen würde.

In einer weiteren Ausführungsform kann der Schwellenwert zumindest teilweise auf historisch ermittelten Amplituden basieren, welche mit einer zu erwartenden Restlebenszeit des elektrischen Bauteils assoziiert sein können.

Eine zu erwartende Restlebenszeit kann einer Zeitspanne entsprechen, welche zum Zeitpunkt des Bestimmens, ob eine für den Degradationsfortschritt indikative Amplitude eine Degradation anzeigt, beginnt und mit einem Zeitpunkt endet, zu welchem ein Austausch des Stromrichters erfolgen sollte und/oder zu welchem der Stromrichter mit hoher Wahrscheinlichkeit einem Ausfall unterliegt.

Die erwartete Restlebenszeit kann einer stochastischen Vorhersage unterliegen. In einem derartigen Fall können Wahrscheinlichkeitsintervalle definiert werden, welche angeben, zu welchen Zeitpunkten in der Zukunft (z.B. ab dem Zeitpunkt des Bestimmens gerechnet) der Stromrichter mit welcher Wahrscheinlichkeit ausfallen wird und daher ggf. vorsorglich bereits getauscht werden sollte.

Der vorbestimmte Schwellenwert kann auf einer Reduzierung einer Amplitude basieren, welche für in der Vergangenheit verwendete Stromrichter bestimmt wurde. In anderen Fällen kann der vorbestimmte Schwellenwert auch durch eine Simulation und/oder ein neuronales Netzwerk bestimmt worden sein. Zusätzlich oder alternativ kann der vorbestimmte Schwellenwert auch durch ein Digital Twin Model eines Stromrichters erhalten werden.

Durch Einbeziehen eines Schwellenwerts kann die Entscheidung, ob eine Degradation bereits einen Tausch des Stromrichters erfordert, auf historisch gewonnene Daten gestützt werden und damit die Zuverlässigkeit der Vorhersage, ob ein Tausch des Stromrichters erforderlich ist, verbessert werden.

In einer weiteren Ausführungsform kann der Stromrichter ein 3-phasiger 2-Level Wechselrichter sein.

Ein 3-phasiger 2-Level oder ein 3-phasiger Multi-Level Wechselrichter kann auch als eine Drehstrombrückenschaltung bezeichnet werden. Die Drehstrombrückenschaltung kann als ein Leistungshalbleitermodul bereitgestellt werden.

In einer weiteren Ausführungsform kann der Stromrichter zumindest ein Halbleitermodul, bevorzugt sechs Halbleitermodule umfassen, wobei das zumindest eine Halbleitermodul bevorzugt ein Bipolartransistor mit isolierter Gate-Elektrode, IGBT, oder ein metal-oxide-semiconductor field-effect transistor, MOSFET, ist.

In einigen Fällen kann der MOSFET z.B. ein SiC- oder GaN-basierter MOSFET sein. Die für die MOSFET-Herstellung verwendeten Materialein sind jedoch nicht auf diese beschränkt und auch andere Materialien können für die MOSFET-Herstellung verwendet werden.

In einigen Fällen kann der Stromrichter ein Halbleitermodul, zwei, drei, vier, fünf, sechs, sieben, acht, neun, zehn oder mehr Halbleitermodule umfassen.

Es sei angemerkt, dass die hierin genannten Aspekte der Erfindung nicht auf IGBTs oder MOS-FETs als Halbleitermodule beschränkt sind, sondern dass Aspekte der Erfindung auch auf andere Halbleitermodule, welche hierin nicht explizit beschrieben werden, angewandt werden können.

Dies kann eine besonders kompakte und kostengünstige Implementierung des Stromrichters ermöglichen.

In einer weiteren Ausführungsform kann der Stromrichter zumindest sechs Halbleitermodule umfassen, welche im Betrieb des Stromrichters in einer vordefinierten Zeitperiode seriell beschaltet werden können und zu dem Ausgangsstrom und/oder der Ausgangsspannung beitragen.

Die vordefinierte Zeitperiode kann durch eine Taktfrequenz eines jeden der sechs Halbleitermodule gegeben sein. Die vordefinierte Zeitperiode kann z.B. 100 μs bis 1000 μs, bevorzugter 200 μs bis 800 μs, noch bevorzugter 300 μs bis 600 μs und am meisten bevorzugt 500 μs umfassen.

Die Verwendung von sechs Halbleitermodulen kann für einen dreiphasigen Drehstrom somit ideale Gleichrichterbedingungen bereitstellen.

In einer weiteren Ausführungsform kann das Erfassen des zeitlichen Verlaufs ein Erfassen eines zeitlichen Verlaufs eines Ausgangsstroms und/oder einer Ausgangsspannung des Stromrichters und/oder eines Proportional-und/oder Integralteils eines PI-Reglers für jedes der zumindest sechs Halbleitermodule umfassen. Ferner kann das Bestimmen der für den Degradationsfortschritt indikativen Amplitude ferner ein Bestimmen je einer Amplitude für jeden der zumindest sechs zeitlichen Verläufe umfassen sowie ein Bestimmen eines Degradationsfortschritts für zumindest eines der Halbleitermodule basierend auf dem Vergleichen.

In einigen Fällen kann zumindest eines der Halbleitermodule einer Degradation unterliegen, andere der Halbleitermodule jedoch nicht. In einem derartigen Fall kann durch Bestimmen einer relativen Phasenlage des erfassten zeitlichen Verlaufs für jede mögliche Kombination der Halbleitermodule auf ein potentiell degradiertes Halbleitermodul geschlossen werden.

Dies kann ein zielgerichteteres Bestimmen eines degradierten Halbleitermoduls als Teil eines Stromrichters ermöglichen, da nicht nur auf eine Degradation des Stromrichters als solchen geschlossen werden kann, sondern auch auf eine Degradation von dessen Komponenten.

In einer weiteren Ausführungsform kann das Vergleichen der bestimmten Amplituden ein Bestimmen einer relativen Phasenlage der erfassten zeitlichen Verläufe für jedes der zumindest sechs Halbleitermodule umfassen.

Das Bestimmen der Phasenlage kann z.B. ein Vergleichen verschiedener Amplituden höherer Harmonischer zu einem bestimmten Zeitpunkt umfassen. Die Phasenlage kann sich durch Verhältnisbildung entsprechend zweier Amplituden ergeben, wobei die für die Verhältnisbildung verwendeten Amplituden aus einem für einen gleichen erfassten zeitlichen Verlauf hervorgehen.

Durch Bestimmen der relativen Phasenlage kann in effizienter Weise ein weiterer für den Degradationsfortschritt des Stromrichters indikativer Parameter gewonnen werden und die Vorhersagegenauigkeit bzgl. des Degradationsfortschritts weiter verbessert werden.

In einer weiteren Ausführungsform können die zuvor genannten Verfahrensschritte sequentiell und zyklisch ausgeführt werden, um eine zeitliche Entwicklung des Degradationsfortschritts zu bestimmen.

Unter einem sequentiellen Ausführen kann in diesem Zusammenhang ein Ausführen der oben genannten Verfahrensschritte in der ebenfalls oben angeführten Reihenfolge verstanden werden.

Unter einem zyklischen Ausführen kann ein wiederholtes Ausführen der oben genannten Verfahrensschritte (in der ebenfalls oben genannten Reihenfolge) verstanden werden.

In einer weiteren Ausführungsform kann der Ausgangsstrom ein Drehmoment- und/oder Magnetfeld-erzeugender Strom sein.

Der Magnetfeld-erzeugende Strom kann dazu benutzt werden ein Magnetfeld eines Stator- und/oder Rotorteils eines elektrischen Antriebs zu erzeugen (z.B. durch elektrisch leitfähiges Kontaktieren zumindest einer Spule des Stators und/oder Rotors). Der elektrische Antrieb kann dabei mit dem Stromrichter leitend verbunden sein.

Der Drehmoment-erzeugende Strom kann dazu benutzt werden, ein Drehmoment eines Rotors relativ zu einem Stator eines elektrischen Antriebs zu erzeugen (z.B. durch ein elektrisch leitfähiges Kontaktieren zumindest einer Spule des Stators und/oder Rotors).

Auf diese Weise kann sichergestellt werden, dass mögliche unerwünschte Effekte, welche durch eine Degradation des Stromrichters hervorgerufen werden können, auf das elektrische Antriebsmittel frühzeitig detektiert werden können, um einen unerwünschten Betriebszustand oder eine Beschädigung des Antriebsmittels unterbinden zu können.

Ein zweiter Aspekt der vorliegenden Erfindung bezieht sich auf ein Computerprogrammprodukt, umfassend Befehle, die bei der Ausführung des Programms durch einen Computer diesen veranlassen, das Verfahren nach einem der vorstehenden Ausführungsformen auszuführen.

Ein Computerprogrammprodukt, wie z.B. ein Computer-programm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ein dritter Aspekt der vorliegenden Erfindung bezieht sich auf eine Computer-implementierte Vorrichtung zum Bestimmen eines Degradationsfortschritts eines Stromrichters. Die Computer-implementierte Vorrichtung kann eine Erfassungseinheit zum Erfassen eines zeitlichen Verlaufs eines Ausgangsstroms und/oder einer Ausgangsspannung des Stromrichters und/oder eines Proportional- und/oder Integralteils eines PI-Reglers, wobei der Ausgangsstrom und/oder die Ausgangsspannung zur Zuführung zu einem elektrischen Antriebs-mittel bestimmt ist und der PI-Regler zur Regelung des Ausgangsstroms und/oder der Ausgangsspannung des Stromrichters bestimmt ist umfassen. Ferner kann die Computer-implementierte Vorrichtung eine Ausführungseinheit zum Ausführen einer Frequenzanalyse und/oder einer Zeit-Frequenz-Analyse basierend auf dem erfassten zeitlichen Verlauf sowie eine Bestimmungseinheit zum Bestimmen einer für den Degradationsfortschritt indikativen Amplitude einer höheren Harmonischen basierend auf der Frequenzanalyse und/oder einer für den Degradationsfortschritt indikativen Amplitude eines Frequenzbands basierend auf der Zeit-Frequenz-Analyse umfassen. Des Weiteren kann die Computer-implementierte Vorrichtung eine Vergleichseinheit zum Vergleichen der bestimmten Amplitude mit einer für einen Degradationsfortschritt des Stromrichters indikativen Referenzamplitude sowie eine Bestimmungseinheit zum Bestimmen des Degradationsfortschritts des Stromrichters basierend auf dem Vergleichen umfassen.

Die jeweilige Einheit, zum Beispiel Erfassungseinheit, Ausführungseinheit, Bestimmungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

In einer Ausführungsform kann die Computer-implementierte Vorrichtung ferner eine Ausführungseinheit zum Ausführen des Computerprogrammprodukts wie oben beschrieben und/oder eine weitere Ausführungseinheit zum Ausführen des Verfahrens wie oben beschrieben umfassen.

Die Ausführungseinheit kann z.B. als Computer, Prozessor, Field Programmable Gate Array (FPGA) oder eine Kombination davon vorgesehen sein.

Ein vierter Aspekt Ader vorliegenden Erfindung bezieht sich auf ein System zum Bestimmen eines Degradationsfortschritts eines Stromrichters. Das System kann das Computerprogrammprodukt wie oben beschrieben sowie die Computer-implementierte Vorrichtung wie oben beschrieben umfassen.

Das Computerprogrammprodukt kann in der Computer-implementierten Vorrichtung enthalten sein. In alternativen Beispielen kann das Computerprogramm auch in einer von der Computer-implementierten Vorrichtung entfernt vorgehaltenen Einheit enthalten sein. In letzterem beispielhaft genannten Fall kann die Computer-implementierte Vorrichtung über ein Netzwerk (z.B. ein lokales Netzwerk oder das Internet) oder eine USB-Verbindung auf das Computerprogrammprodukt zugreifen

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Insbesondere sei angemerkt, dass das oben beschriebene Verfahren bzw. die oben beschriebene Vorrichtung, das oben beschriebene Computerprogrammprodukt sowie das System nicht auf Stromrichter beschränkt ist, sondern auch in anderen industriellen Kontexten Anwendung finden kann.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fign. 1A-1C      zeigen einen Querschnitt durch einen IGBT (Fig. 1A) sowie mögliche Degradationsursachen eines Stromrichters (Fign. 1B und 1C);

Fig. 2      zeigt ein exemplarisches System, welche ein Zusammenwirken eines Stromrichters in einem möglichen erfindungsgemäßen Kontext zeigt;

Fig. 3      zeigt ein exemplarisches Ersatzschaltbild einer Drehstrombrückenschaltung;

Fig. 4      zeigt ein exemplarisches $\alpha\beta$-Diagramm;

Fig. 5      zeigt einen exemplarischen Systemflussplan gemäß Aspekten der vorliegenden Erfindung;

Fign. 6A und 6B      zeigen exemplarische Ereigniswolken als Resultat des Ausführens einer erfindungsgemäßen Frequenzanalyse;

Fign. 7A und 7B      zeigen exemplarische Ereigniswolken als Resultat des Ausführens einer erfindungsgemäßen Frequenzanalyse;

Fign. 8A und 8B      zeigen exemplarische Ereigniswolken als Resultat des Ausführens einer erfindungsgemäßen Frequenzanalyse;

Fign. 9A und 9B      zeigen exemplarische Ereigniswolken als Resultat des Ausführens einer erfindungsgemäßen Frequenzanalyse;

Fign. 10A und 10B      zeigen exemplarische Ereigniswolken als Resultat des Ausführens einer erfindungsgemäßen Frequenzanalyse;

Fig. 11      zeigt exemplarische Strom-Spannungskennlinien für einen IGBT und eine Diode bei einer Variation einer Kühlkörpertemperatur sowie Auswirkungen auf eine Trajektorie eines $\alpha\beta$-Diagramms;

Fig. 12      zeigt ein Ablaufdiagramm eines exemplarischen Computer-implementierten Verfahrens;

Fig. 13      zeigt eine exemplarische Computer-implementierte Vorrichtung; und

Fig. 14      zeigt ein exemplarisches System.

In den Figuren sind gleiche oder funktionsgleiche Elemente mit denselben Bezugszeichen versehen worden, sofern nichts anderes angegeben ist.

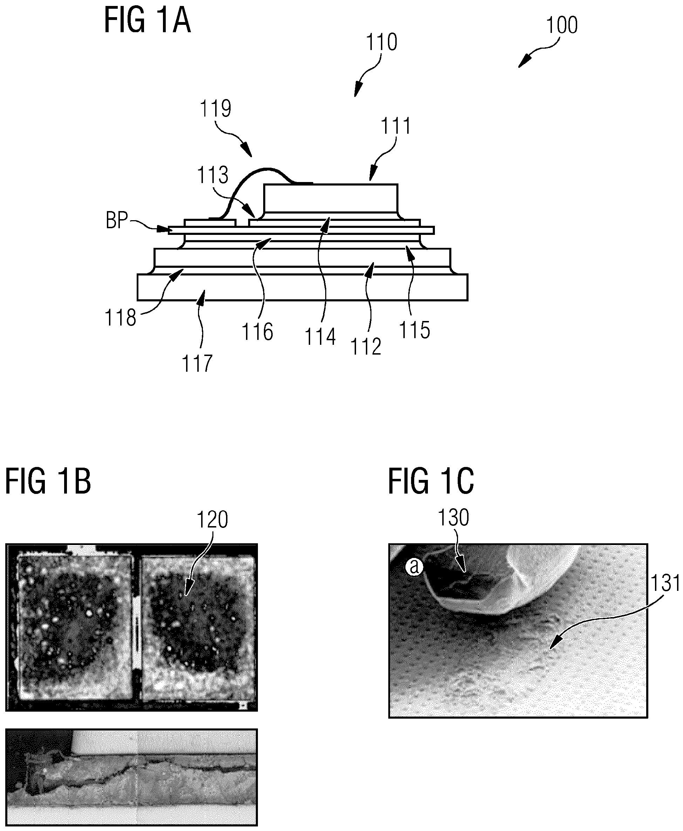

Fig. 1 zeigt einen exemplarischen Querschnitt durch einen IGBT 110, wie dieser z.B. in einem Stromrichter bzw. Umwandler enthalten sein kann.

IGBT besteht aus einem Chip 111, welcher auf einer Basisplatte 112 angeordnet ist. Zwischen dem Chip 111 und der Basisplatte 112 kann eine erste Kupferschicht 113 angeordnet sein, um eine optimale Wärmeleitung zwischen dem Chip 111 und der Basisplatte 112 zu ermöglichen.

Chip 111 kann durch eine erste Lötzinnschicht 114 an der Kupferschicht 113 angebracht sein. Ferner kann die Basisplatte 112 über eine zweite Lötzinnschicht 115 und eine zweite Kupferschicht 116 mit der ersten Kupferschicht 113 verbunden sein.

Ferner kann zwischen der ersten Kupferschicht 113 und der zweiten Kupferschicht 116 eine (kleinere) Basisplatte BP vorgesehen sein.

Basisplatte 112 kann oberhalb einer Kühlplatte 117 angeordnet sein. Zwischen der Basisplatte 112 und der Kühlplatte 117 kann eine Wärmeleitpasteschicht 118 vorgesehen sein.

Ferner kann eine Oberseite des Chips 111 über einen Bonddraht 119 mit einer Stromversorgung (in Fig. 1 nicht abgebildet) verbunden sein.

Fig. 1B zeigt ferner eine mögliche Degradation eines Stromrichters (Ciappa, M.: "Selected failure mechanisms of modern power modules", Microelectronics Reliability, Vol. 42, Issues 4-5, 2002), welche z.B. durch eine Degradation einer Lötverbindung 120 hervorgerufen werden kann. Derartige Fehler in Lötverbindungen können z.B. durch (thermische) Risse im Lot hervorgerufen werden und/oder durch eine Ablösung der Lötverbindung (z.B. auch durch ein Ablösen eines Bonddrahts von der Oberseite des Chips 112 oder einer Stromversorgung). Eine Degradation einer Lötverbindung kann zu einer schlechteren elektrischen Kontaktierung führen und damit zu einer schlechteren Übertragung elektrischer Energie zum Betrieb von z.B. einem IGBT 110. Dies kann ferner zu einer Erhöhung des thermischen Widerstands führen und damit zu einer Änderung einer Durchlassspannung des IGBT was zu einer unerwünschten Erwärmung des IGBT führen kann und damit eine Degradation des IGBT 110 weiter vorantreiben kann.

Fig. 1C zeigt eine weitere mögliche Degradation des Umrichters (Ciappa, M.: "Selected failure mechanisms of modern power modules", Microelectronics Reliability, Vol. 42, Issues 4-5, 2002), welche z.B. durch eine Ablösung des Bonddrahtes 130 von einer Stromversorgung 131 hervorgerufen werden kann. In einem derartigen Fall kann z.B. eine Kontaktfläche zwischen dem Bonddraht 130 und der Stromversorgung 131 durch die Ablösung des Bonddrahtes 130 verkleinert werden. Dies kann zu einer Erhöhung des Widerstands der leitenden Verbindung zwischen z.B. einem IGBT und einer darunterliegenden Stromversorgung, verstanden werden. Dieser erhöhte Widerstand muss z.B. durch eine Ausgangsstromregelung des IGBT 110 kompensiert werden. Dies kann schließlich zu einer Erwärmung des IGBT 110 beitragen und damit dessen Degradation weiter vorantreiben.

In einigen Fällen kann es auch vorkommen, dass sich ein Bonddraht abhebt. Da in einem Hauptstrompfad meist mehrere Bonddrähte parallel geschaltet sind, führt ein Abheben eines Bonddrahts nicht unmittelbar zu einem Totalversagen des betreffenden IGBTs, jedoch kann sich durch das Abheben der Widerstand der Bondverbindungerhöhen was zu den vorgenannten Folgen führen kann.

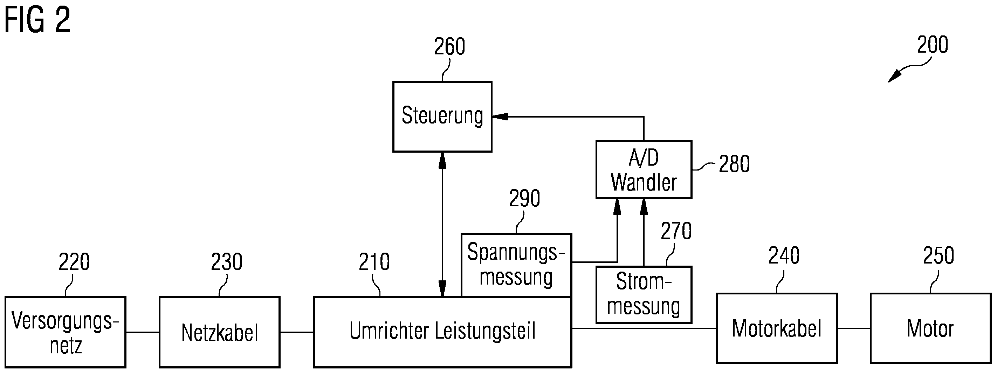

Fig. 2 zeigt ein exemplarisches System 200, welche ein Zusammenwirken eines Stromrichters (auch Umrichter) in einem möglichen erfindungsgemäßen Kontext zeigt.

Unter einem Stromrichter werden vorliegend Vorrichtungen verstanden, welche z.B. Wechselstrom in Gleichstrom umwandeln (Gleichrichter) oder Vorrichtungen, welche einen Gleichstrom in einen Wechselstrom umwandeln (Wechselrichter). Ferner kann unter einem Stromrichter auch ein Umrichter verstanden werden, welcher z.B. als Frequenzumrichter fungieren kann und z.B. eine Änderung einer Wechselstromfrequenz (d.h. einer Umwandlung der Frequenz eines Eingangswechselstroms in eine andere Frequenz eines Ausgangswechselstroms, z.B. über einen intermediären Gleichstrom) bewirken kann.

Das System 200 umfasst einen Umrichter (Leistungsteil) 210. Der Umrichter 210 wird von einem Versorgungsnetz 220 über ein Netzkabel 230 eingangsseitig mit Strom versorgt.

Ausgangsseitig kann der Umrichter 210 über ein Motorkabel 240 mit einem Motor 250 verbunden sein.

Umrichter 210 kann sich ferner mittels Steuerung 260 in einem geschlossenen Regelkreis befinden, welcher konfiguriert ist einen Ausgangsstrom des Umrichters 210 auf einem gewünschten, möglicherweise zeitabhängigen Wert zu halten.

Dies kann dadurch erreicht werden, dass ein Ausgangsstrom des Umrichters 210 durch eine Strommessung 270 gemessen wird (z.B. durch Messen eines um ein Kabel (z.B. Motorkabel 240) hervorgerufenen Magnetfelds). Das Resultat der Strommessung 270 kann eine zum Ausgangsstrom proportionale Spannung (z.B. proportionale Ausgangsspannung) sein, welche einem A/D Wandler 280 zugeführt werden kann.

A/D Wandler 280 kann dazu eingerichtet sein, die analoge Ausgangsspannung zu digitalisieren und damit in ein digitales Messsignal umzuwandeln.

Bevorzugt erfüllt die Abtastrate des A/D Wandlers 280 zumindest das Nyqvist-Kriterium. In einigen beispielhaften Fällen, wie hierin beschrieben, kann jedoch auch eine Überabtastung des Ausgangsstroms mittels A/D Wandler 280 vorgenommen werden.

In einigen Fällen kann auch eine dedizierte Spannungsmessung 290 (z.B. eine direkte Ausgangsspannung) vorgesehen sein. In einem derartigen beispielhaften Anwendungsfall kann der A/D Wandler 280 auch direkt die betreffende Ausgangsspannung abtasten.

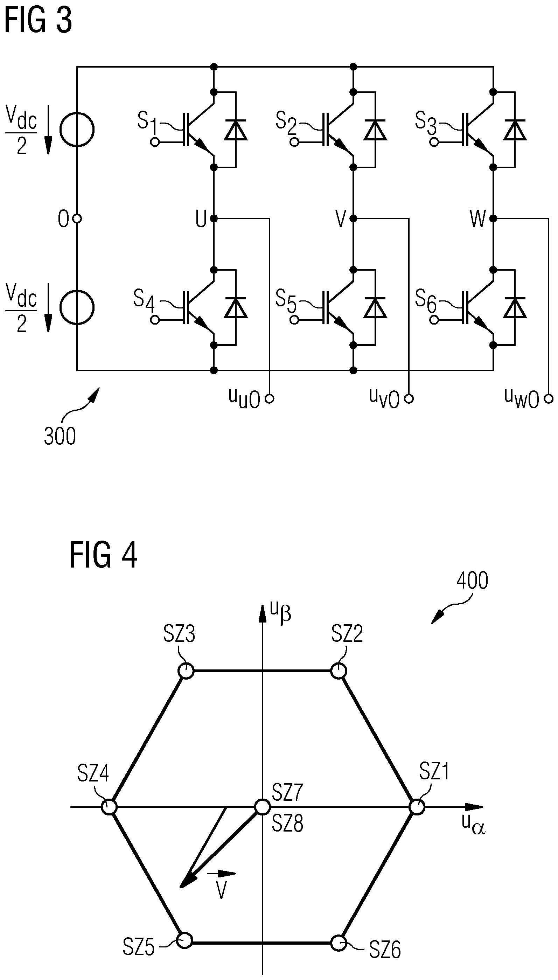

Fig. 3 zeigt ein exemplarisches Ersatzschaltbild einer Drehstrombrückenschaltung 300 gemäß Aspekten der vorliegenden Erfindung.

Drehstrombrückenschaltung 300 umfasst drei in einer oberen Hälfte der Drehstrombrückenschaltung 300 angeordnete Halbleitermodule $S_1$-$S_3$.

Drehstrombrückenschaltung 300 umfasst drei in einer unteren Hälfte der Drehstrombrückenschaltung 300 angeordnete Halbleitermodule $S_4$-$S_6$.

Alle oder zumindest einige der Halbleitermodule $S_1$-$S_6$ können als IGBTs bereitgestellt werden. Parallel zu jeder der IGBTs (welche als Transistoren dargestellt sind) kann eine jeweilige Diode geschaltet werden.

Drehstrombrückenschaltung wird vorliegend mit einer Gleichspannungsquelle $V_{DC}$ betrieben.

Drehstrombrückenschaltung 300 umfasst ferner drei Klemmen $u_{u0}$, $u_{v0}$ und $u_{w0}$, über die eine 3-phasige Last an einen Ausgang der Drehstrombrückenschaltung 300 angeschlossen werden kann. Es sei jedoch darauf hingewiesen, dass auch Implementierungen mit weniger als drei Phasen oder Implementierungen mit mehr als drei Phasen möglich sind.

Ein Einschalten der oberen Halbleitermodule $S_1$-$S_3$ kann dazu führen, dass die drei Klemmen $u_{u0}$, $u_{v0}$ und $u_{w0}$ mit einem positiven Zwischenkreispotential verbunden werden, wobei die Klemmen $u_{u0}$, $u_{v0}$ und $u_{w0}$ jeweils an den entsprechenden Knoten U, V, W abgegriffen werden.

Analoges gilt für ein negatives Zwischenkreispotential, wenn die jeweiligen in der unteren Hälfte der Drehstrombrückenschaltung 300 angeordneten Halbleitermodule $S_4$-$S_6$ eingeschaltet werden.

Um einen Kurzschluss zu vermeiden, ist es von Bedeutung, die in der oberen Hälfte der Drehstrombrückenschaltung 300 angeordneten Halbleitermodule $S_1$-$S_3$ nicht gleichzeitig mit den in der unteren Hälfte der Drehstrombrückenschaltung 300 angeordneten Halbleitermodule S4-S6 zu betreiben. Ein paralleler Betrieb von Halbleitermodulen einer der beiden Hälften ist hingegen möglich. In einem derartigen Fall entscheidet das Stromvorzeichen einer jeweiligen Phase, ob ein negatives oder positives Zwischenkreispotential mit den Klemmen $u_{u0}$, $u_{v0}$ und $u_{w0}$ verbunden ist.

Während einer mechanischen und/oder elektronischen Periode (Fundamentalperiode) können sich Szenarien ergeben, in welchen Gruppen von Halbleitermodulen für gewisse Zeitabschnitte für längere Zeiten beschaltet werden als dies für andere Gruppen von IGBTs der Fall sein kann. Dies kann sowohl in einer "two level" (Spannung kann zwischen zwei Werten geschaltet werden, wie z.B. $\pm V_{DC}/2$) als auch in einer "multilevel" (Spannung kann zwischen mehr als zwei Werten geschaltet werden, wie z.B. drei Werten) Topologie auftreten.

Da Halbleitermodule meist gruppenweise beschaltet werden, können sich so zeitliche Sektoren ergeben, sodass ein von dem Stromrichter ausgegebenes Signal aus einer Superposition der jeweils beschalteten Halbleitermodulen ergibt. Eine Degradation eines Halbleitermoduls kann zu einer Veränderung der Perioden (-dauer, z.B. im Bereich einer Halbperiode oder Viertelperiode) führen, was durch eine einen Ausgang des Stromrichters regelnde Elektronik ausgeglichen werden muss und sich somit z.B. in einem P- und/oder I-Signals eines PI-Reglers widerspiegeln kann.

Es sei ferner angemerkt, dass jede einzelne Phase zwei verschiedene diskrete Schaltzustände (ein/aus) annehmen kann. Wird von drei Phasen ausgegangen, so ergeben sich insgesamt $2^3 = 8$ Schaltzustände.

Ein sequentielles Beschalten der Halbleitermodule der Drehstrombrückenschaltung 300 führt zu einem Durchlaufen von insgesamt sechs Schaltzuständen, welche in Form eines $\alpha\beta$-Diagramms 400 dargestellt werden können, wie in Fig. 4 dargestellt.

Fig. 4 zeigt ein $\alpha\beta$-Diagramm 400 umfassend einen Vektor $\vec{v}$ welcher in der $\alpha\beta$-Ebene rotiert und mit Hilfe der Schaltzustände SZ1-SZ6 nachgebildet wird, wobei jeder der Schaltzustände SZ1-SZ6 dem Beschalten eines respektiven Halbleitermoduls $S_1$-$S_6$ entspricht.

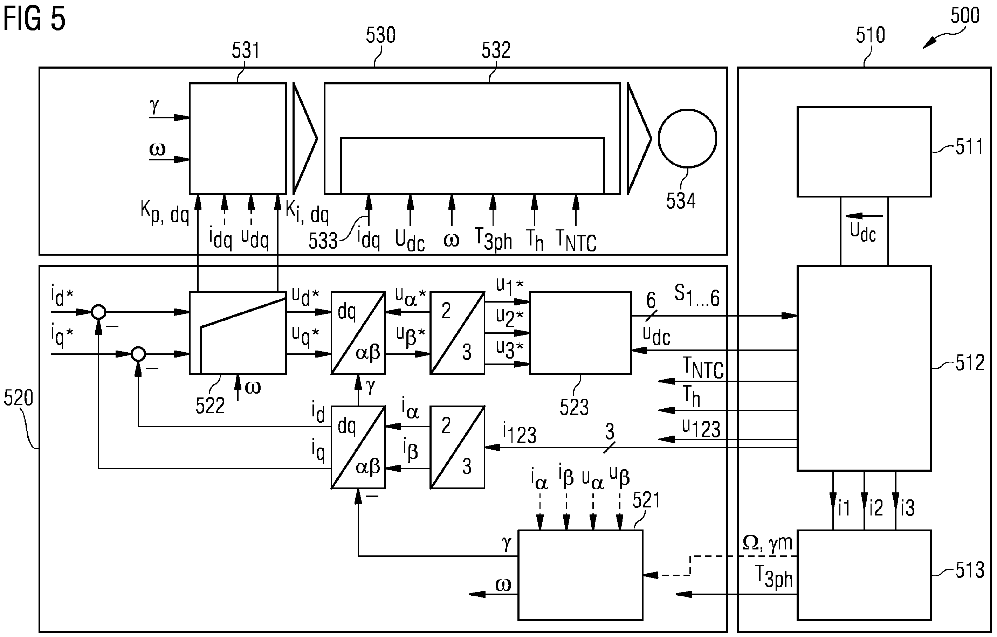

Fig. 5 zeigt einen Signalflussplan 500 eines Zusammenwirkens eines physischen Systems 510, eines Regelungssystems 520 sowie eines parallel zum Regelungssystems 520 geschalteten Condition Monitoring Systems 530.

Das physikalische System 510 kann dabei ein DC-System 511 umfassen. DC-System 511 kann zum Einsatz zusammen mit einem Stromrichter für ein elektrisches Antriebssystem bereitgestellt sein, welcher in der Regel eine Zwischenkreisspannung über eine Einspeisung zur Verfügung stellt (Diodengleichrichter, Active Front End (AFE), also einer aktiven Einspeisung, die aus einem Drehstromnetz einen Gleichspannungszwischenkreis zur Verfügung stellen kann). Grundsätzlich ist jedoch auch jede andere DC-Quelle bzw. -Last implementierbar, wie z.B. eine DC-Ladesäule oder ein Photovoltaik-Feld, etc. Die hierin diskutierten Ausführungen können z.B. auch auf AC-AC Umrichter (z.B. Matrixumrichter) angewendet werden.

Die von dem DC-System 511 zur Verfügung gestellte Spannung $U_{DC}$ kann an einen Stromrichter 512 bzw. eine entsprechende Leistungselektronik zur Verfügung gestellt werden. Der Stromrichter 512 kann dabei z.B. als eine Drehstrombrückenschaltung (z.B. die Drehstrombrückenschaltung 300) bereitgestellt werden. Der Stromrichter 512 bzw. die Leistungselektronik besteht dabei nicht alleinig aus der Drehstrombrückenschaltung, sondern kann auch Sensoren zur Strommessung, Temperaturüberwachung, Spannungsmessung, etc. umfassen. Diese Sensoren können zusätzlich in das datenbasierte Condition Monitoring eingebunden werden.

Mit einem Ausgang des Stromrichters 512 ist schließlich ein drei-phasiges AC-System 513 verbunden, welches z.B. durch die drei Phasen $i_1$, $i_2$ und $i_3$ mit dem Stromrichter 512 verbunden sein kann, welche durch den Stromrichter 512 erzeugt wurden.

Das drei-phasige AC-System 513 kann als ein Elektromotor bzw. eine Asynchronmaschine oder eine Synchronmaschine bereitgestellt werden.

In einigen Fällen kann das drei-phasige AC-System 513 jedoch auch ein drei-phasiges elektrisches Netz sein.

Regelungssystem 520 kann auf einer feldorientierten Regelung (auch Vektorregelung) basieren. Bei der feldorientierten Regelung werden sinusförmige - oder als weitgehend sinusförmig angenommene - Wechselgrößen (beispielsweise Wechselspannungen und Wechselströme) nicht direkt in ihrem zeitlichen Momentanwert, sondern in einem um den Phasenwinkel innerhalb der Periode bereinigten Momentanwert geregelt. Zu diesem Zweck werden die erfassten Wechselgrößen jeweils in ein mit der Frequenz der Wechselgrößen rotierendes Koordinatensystem übertragen. Innerhalb des rotierenden Koordinatensystems ergeben sich dann aus den Wechselgrößen Gleichgrößen, auf die alle üblichen Verfahren der Regelungstechnik angewandt werden können.

In einer möglichen Implementierung kann dabei eine Transformation von Strommesswerten in ein (Rotor-) Flussbasiertes Koordinatensystems (dq-System) erfolgen. Ferner kann sich daran eine entkoppelte Regelung des feldbildenden Stroms (ausgedrückt durch die d-Achse) und des drehmomentbildenden Stroms (ausgedrückt durch die q-Achse) anschließen. Für jede der beiden Koordinatenachsen (d und q) kann ein entsprechender PI-Regler vorgesehen werden.

Ein Transformationswinkel des flussbasierten Koordinatensystems kann je nach Anwendungsfall direkt gemessen oder über eine Modellierung geschätzt werden, wie dies durch Flusswinkelbestimmungseinheit 521 ermöglicht werden kann.

Bei Asynchronmaschinen kann das Spannungs-/Strommodell auf Messgrößen basieren, bei Synchronmaschinen kann eine direkte Messung der Rotorlage erfolgen, bei einem elektrischen Netz kann ein Spannungsmodell bzw. eine Phasenregelschleife (engl.: *phase locked loop* (PLL)) basierend auf Messgrößen implementiert werden.

Durch einen Regelungsblock 522 kann aus einer Regelabweichung (z.B. durch einen Soll-/Istwertvergleich) eine Sollspannung berechnet werden, welche vom Stromrichter 512 ausgegeben werden muss, um die Regelabweichung zu minimieren, idealerweise auf null zu setzen. Die so bestimmte Sollspannung kann aus dem flussbasierten Koordinatensystem rücktransformiert werden und als Spannungssollwerte für die drei Phasen des betrachteten Systems verwendet werden.

Innerhalb des Modulators 523 können aus den Sollspannungen zusammen mit einer gemessenen Zwischenkreisspannung die Schaltzeitpunkte für die Leistungshalbleiter berechnet und als Ansteuersignale an den Stromrichter übergeben werden.

Strom $i_{123}$ kann für die Stromregelung in das dq-System überführt werden und die eigentliche Stromregelung im dq-System ausgeführt werden. Nach Berechnung der eigentlichen Regelungsgrößen kann eine Rücktransformation in ein physisches System erfolgen um die eigentliche Regelung ausführen zu können.

Das Condition Monitoring 530 kann derart bereitgestellt werden, dass es die verfügbaren Mess- und/oder Reglergrößen auswerten kann. Dies kann z.B. einen P- und/oder I-Teil der beiden PI-Regler umfassen, gemessene Ströme und/oder gemessene Spannungen. Diese können jeweils als zeitlicher Verlauf erfasst worden sein.

In einem ersten Schritt können in einer Fenster- bzw. Analyseeinheit 531 die verfügbaren Daten mittels eines auf eine elektrische oder mechanische Periode abgestimmten Fensters (z.B. durch Falten mit einer Fensterfunktion) vorbearbeitet werden. Hieran anschließen kann sich das Ausführen einer Frequenzanalyse, z.B. das Ausführen einer FFT, einer Fourier-Serie, etc. Hieraus können dazugehörige Fourierkoeffizienten (Amplitude und Phasenlage) der im Signal des erfassten zeitlichen Verlaufs enthaltenen Oberwellen.

Das Ausführen einer derartigen Frequenzanalyse kann zyklisch und damit wiederholt ausgeführt werden. Dies kann ein Überwachen einer möglichen Änderung der Fourierkoeffizienten im Zeitverlauf ermöglichen.

Basierend hierauf kann mittels einer Condition Monitoring Überwachungseinheit 532 ein Bestimmen erfolgen, z.B. durch Vergleichen der Fourierkoeffizienten mit Referenz-Fourierkoeffizienten, ob ein Voranschreiten des Degradationsfortschritts erfolgt ist.

Zusätzlich können in das datenbasierte Condition Monitoring weitere Umweltbedingungen 533 mit einfließen (z.B. eine Luftfeuchtigkeit, Umgebungstemperatur, etc.). Bei gleichbleibenden Umweltbedingungen kann aus einer Veränderung der Fourierkoeffizienten so auf ein Voranschreiten einer Degradation geschlossen werden, wodurch auf einen beginnenden Fehler im betrachteten System geschlossen werden kann. In anderen Worten, typische Fehlerbilder in Drehstrombrückenschaltungen können typischerweise zu entsprechenden Signaturen in den untersuchten höheren Harmonischen führen.

Basierend hierauf kann Überwachungseinheit 532 dann einen Gesundheitszustand 534 (engl.: *state of health* (SOH)) des betrachteten Systems bestimmen.

Wird eine Phasenlage der betrachteten höheren Harmonischen bestimmt, so kann eine Fehlerlokalisation dahingehend erfolgen, welches der Halbleitermodule möglicherweise von einem Fehler bzw. Ausfall betroffen ist, wie oben bereits beschrieben.

Es sei angemerkt, dass das Condition Monitoring 530 physisch in dem physischen System 510 enthalten sein kann (z.B. als Teil des drei-phasigen AC-Systems 513; in einigen Fällen kann das Condition Monitoring 530 auch Teil des Regelungssystems 520 sein und dort z.B. als Softwareeinheit implementiert sein). Alternativ kann es auch möglich sein, dass das Condition Monitoring 530 in einer entfernten Entität (z.B. als Cloud-Dienst, als Edge-Gerät, etc.) vorgehalten wird, welche z.B. mit dem physischen System 510 und/oder dem Regelungssystem 520 in Kommunikationsverbindung steht.

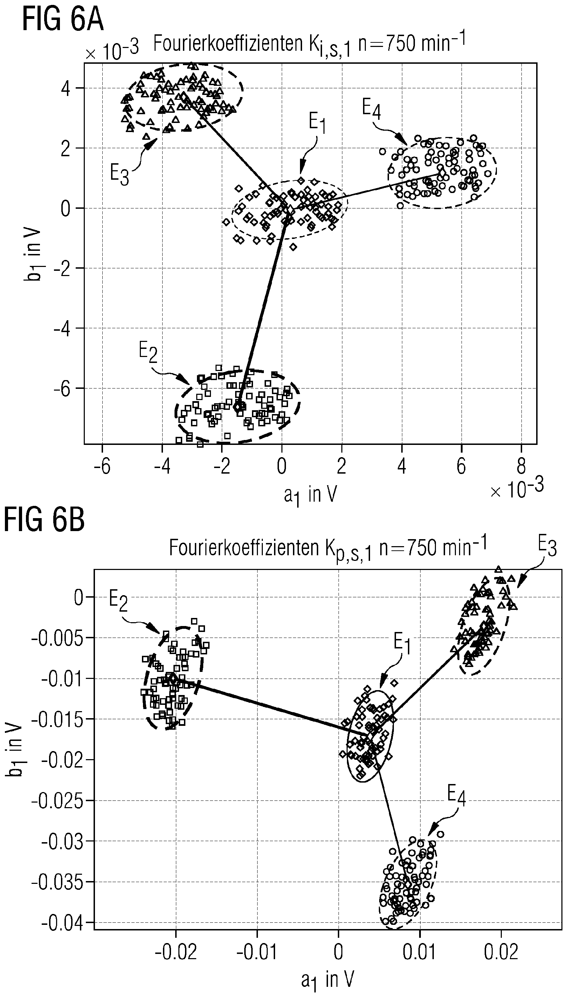

Fig. 6A und 6B zeigen (simulierte) exemplarische Ereigniswolken als Resultat einer Ausführung einer Frequenzanalyse. Die vorliegende Simulation bezieht sich auf die Simulation eines elektrischen Antriebssystems bestehend aus einer Asynchronmaschine und einem Umrichter mit der hierin diskutierten Stromregelung. Für das elektrische Antriebssystem wurde eine mechanische Drehzahl von n = 750 min$^{-1}$ angenommen.

Die dargestellten Ereigniswolken ergeben sich aus einer Auftragung der Fourierkoeffizienten einer jeweiligen ersten Harmonischen wie sie durch ein Durchführen mehrerer Frequenzanalysen basierend auf mehreren erfassten Signalen erhalten wurden. Jede Punktewolke spiegelt eine eigene Simulation wider. In diesem Beispiel wurden drei verschiedene Fehlerfälle simuliert, bei denen jeweils ein IGBT in den oberen Zweigen der Drehstrombrücke beschädigt wurde. Die Punktewolke T1 stellt dabei einen Fehler in S1 aus Fig. 3 dar, Punktewolke T2 einen Fehler in S2, T3 einen Fehler in S3. Die Frequenzanalyse bezog sich dabei jeweils auf den Integral- und Proportionalteil der Stromregelung.

Ereigniswolke $E_1$ entspricht dabei dem als *"gesund"* anzusehenden Fall, d.h. einem Fall, in welchem keine wesentliche Degradation des betrachteten Stromrichters vorliegt.

Tritt eine Degradation des betrachteten Stromrichters ein, so kann eine Verschiebung der Amplituden der Fourierkoeffizienten erfolgen (absolut und/oder relativ zueinander), so dass sich bei Vorliegen eines Degradationsfortschritts Ereigniswolken $E_2$, $E_3$ und $E_4$ ausbilden können, welche von Ereigniswolke $E_1$ verschieden sind. In dem dargestellten Beispiel würden Ereigniswolken $E_2$, $E_3$ und $E_4$ einen entsprechenden Fehlerzustand des Stromrichters anzeigen.

Ein derartiges Fehlerbild kann sich z.B. bei Fehlern in einzelnen Halbleitermodulen (d.h. bei einem Einzelchipfehler) ergeben (z.B. Degradation von Lötbrücken) welche sich in der ersten, zweiten und/oder einem Gleichanteil einer Fourierzerlegung widerspiegeln kann.

Ein mögliches Auftreten eines Fehlers kann z.B. mittels Anwendens einer Metrik auf die ausgebildeten Ereigniswolken $E_2$, $E_3$ und $E_4$ relativ zu einer als gesund anzusehenden Ereigniswolke $E_1$, bestimmt werden.

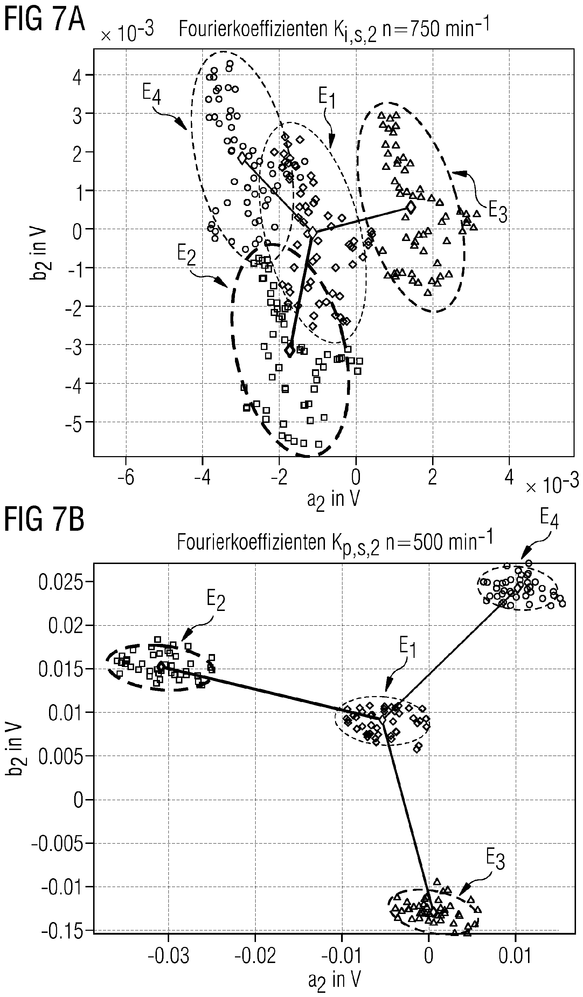

Fign. 7A und 7B zeigen exemplarische Ereigniswolken als Resultat einer Ausführung einer Frequenzanalyse.

In Analogie zu den Ausführungen zu Fig. 6A und 6B ergeben sich die Ereigniswolken aus einer Auftragung der Fourierkoeffizienten einer jeweiligen zweiten Harmonischen wie sie jeweils durch Durchführen mehrerer Frequenzanalysen basierend auf mehreren erfassten Signalen erhalten wurde.

Ereigniswolke $E_1$ entspricht dabei dem als *"gesund"* anzusehenden Fall, d.h. einem Fall, in welchem keine wesentliche Degradation des betrachteten Stromrichters vorliegt.

Tritt eine Degradation des betrachteten Stromrichters auf, so kann eine Verschiebung der Amplituden der Fourierkoeffizienten erfolgen (absolut und/oder relativ zueinander), so dass sich bei Vorliegen eines Degradationsfortschritts Ereigniswolken $E_2$, $E_3$ und $E_4$ ausbilden können, welche von Ereigniswolke $E_1$ verschieden sind. In dem dargestellten Beispiel würden Ereigniswolken $E_2$, $E_3$ und $E_4$ einen entsprechenden Fehlerzustand des Stromrichters anzeigen.

Ein derartiges Fehlerbild kann sich z.B. bei Fehlern in einzelnen Halbleitermodulen (d.h. bei einem Einzelchipfehler) ergeben (z.B. Degradation von Lötbrücken) welche sich in der ersten, zweiten und/oder einem Gleichanteil einer Fourierzerlegung widerspiegeln kann.

Ferner können sich auch Fehler in zwei komplementären Halbleitermodulen einer Halbbrücke (also z.B. den Halbleitermodulen $S_1$ und $S_4$ bzw. $S_2$ und $S_5$ bzw. $S_3$ und $S_6$, wie mit Bezug zu Fig. 3 beschrieben) in den Ereigniswolken einer zweiten Harmonischen widerspiegeln. Derartige Fehler können sich z.B. auch in einem Gleichanteil widerspiegeln. Ebenfalls kann eine auf einen derartigen Fehler bzw. eine Degradation hinweisende Signatur auch in einer sechsten Harmonischen beobachtbar sein.

Der Index $K_{i,s,2}$ bzw. $K_{p,s,2}$ (gemäß Titel der Fign. 7A und 7B) beziehen sich auf den Integralteil (i) bzw. den Proportionalteil (p) der Regelung. Der Proportionalteil wirkt direkt auf eine Regelabweichung, wohingegen der Integralteil die langsamen Änderungen erfasst. Insofern kann die Auswertung des einen, des anderen oder beider Anteile betriebspunktabhängig die gewünschten Informationen enthalten.

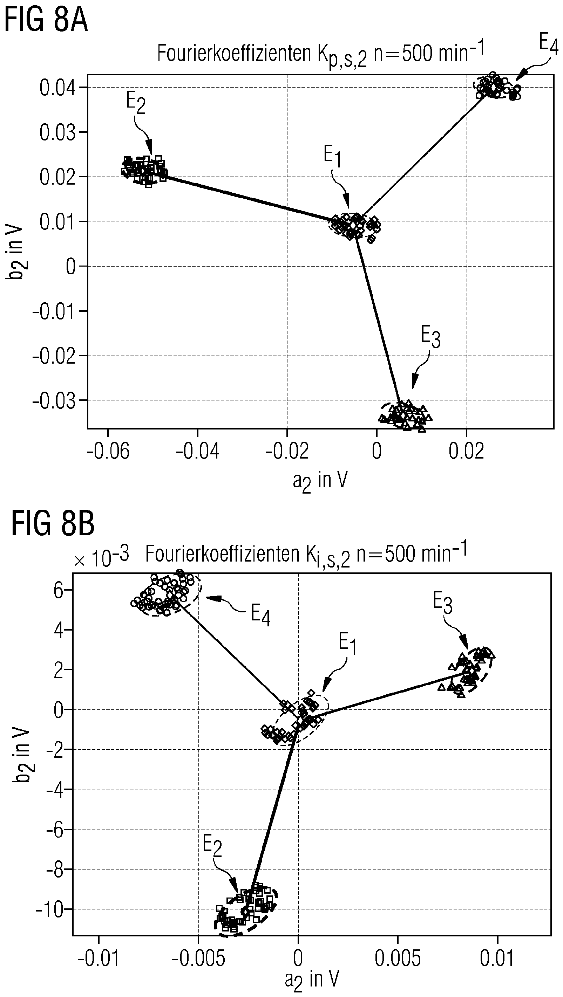

Fign. 8A und 8B zeigen (simulierte) exemplarische Ereigniswolken als Resultat einer Ausführung einer Frequenzanalyse.

In Analogie zu den Ausführungen zu Fign. 6A und 6B bzw. Fign. 7A und 7B ergeben sich die Ereigniswolken aus einer Auftragung der Fourierkoeffizienten einer jeweiligen zweiten Harmonischen wie sie durch Durchführen mehrerer Frequenzanalysen basierend auf mehreren erfassten Signalen erhalten wurde. Durch Bilden eines Verhältnisses der Fourierkoeffizienten $b_2$ zu $a_2$ kann auf eine relative Phasenlage der jeweiligen Phasen geschlossen werden was in einigen Fällen eine Lokalisierung eines Degradationsfortschritts bzw. eines Fehlers ermöglichen kann. Die Frequenzanalyse wurde dabei für den Proportional- bzw. Integralteil einer Stromregelung und jeweils komplementäre Halbleitermodule durchgeführt. Im Speziellen wurden die Analysen für Phase u und ein Halbleitermodul E2, für Phase v für ein Halbleitermodul E4 und für Phase w für ein Halbleitermodul E3 ausgeführt.

Ereigniswolke $E_1$ entspricht dabei dem als *"gesund"* anzusehenden Fall, d.h. einem Fall, in welchem keine wesentliche Degradation des betrachteten Stromrichters vorliegt.

Tritt eine Degradation des betrachteten Stromrichters auf, so kann eine Verschiebung der Amplituden der Fourierkoeffizienten erfolgen (absolut und/oder relativ zueinander), so dass sich bei Vorliegen eines Degradationsfort-

schritts Ereigniswolken $E_2$, $E_3$ und $E_4$ ausbilden können, welche sich von Ereigniswolke $E_1$ unterscheiden. In dem dargestellten Beispiel würden Ereigniswolken $E_2$, $E_3$ und $E_4$ einen entsprechenden Fehlerzustand des Stromrichters anzeigen.

Ein derartiges Fehlerbild kann sich z.B. bei Fehlern in einzelnen Halbleitermodulen (d.h. bei einem Einzelchipfehler) ergeben (z.B. Degradation von Lötbrücken) welche sich in der ersten, zweiten und/oder einem Gleichanteil einer Fourierzerlegung widerspiegeln kann.

Der Index $K_{i,s,2}$ bzw. $K_{p,s,2}$ (gemäß Titel der Fign. 8A und 8B) beziehen sich auf den Integralteil (i) bzw. den Proportionalteil (p) der Regelung wie mit Bezug zu Fign. 7A und 7B beschrieben.

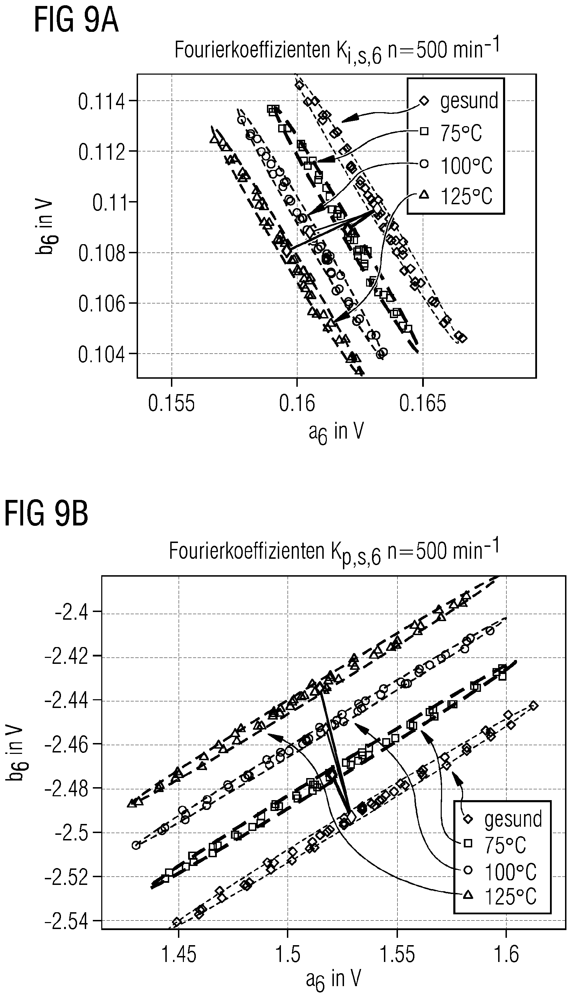

Fign. 9A und 9B zeigen exemplarische Ereigniswolken als Resultat einer Ausführung einer Frequenzanalyse.

In Analogie zu den Ausführungen zu Fign. 6-8 ergeben sich die Ereigniswolken aus einer Auftragung der Fourierkoeffizienten einer jeweiligen sechsten Harmonischen wie sie durch Durchführen mehrerer Frequenzanalysen basierend auf mehreren erfassten Signalen erhalten wurde.

Ereigniswolke $E_1$ entspricht dabei dem als *"gesund"* anzusehenden Fall, d.h. einem Fall, in welchem keine wesentliche Degradation des betrachteten Stromrichters vorliegt.

Tritt eine Degradation des betrachteten Stromrichters ein, so kann eine Verschiebung der Amplituden der Fourierkoeffizienten erfolgen (absolut und/oder relativ zueinander), so dass sich bei Vorliegen eines Degradationsfort-schritts Ereigniswolken $E_2$, $E_3$ und $E_4$ ausbilden können, welche sich von Ereigniswolke $E_1$ unterscheiden. In dem dargestellten Beispiel würden Ereigniswolken $E_2$, $E_3$ und $E_4$ einen entsprechenden Fehlerzustand des Stromrichters anzeigen.

Im dargestellten Beispiel entspricht jede Ereigniswolke einer entsprechenden Kühlkörpertemperatur des Stromrichters. Eine Erwärmung des Kühlkörpers kann z.B. bei Voranschreiten einer Degradation auftreten.

Ereigniswolke $E_2$ repräsentiert dabei eine Ereigniswolke, welche für eine Chiptemperatur eines Halbleitermoduls von 75°C auftreten würde, Ereigniswolke $E_3$ analog dazu den Fall für eine Chiptemperatur von 100°C und Ereigniswolke $E_4$ den Fall für eine Chiptemperatur von 125°C.

Eine Manifestation eines Fehlers in der sechsten Harmonischen kann z.B. bei symmetrischen Fehlern in allen Halbleitermodulen eines Stromrichters auftreten (z.B. auf Grund von einem fehlerhaften Kühlverhalten oder anderen Modulfehlern). Ein derartiger Fehler kann sich nicht nur in einer sechsten Harmonischen manifestieren, sondern ggf. auch in einem Gleichanteil.

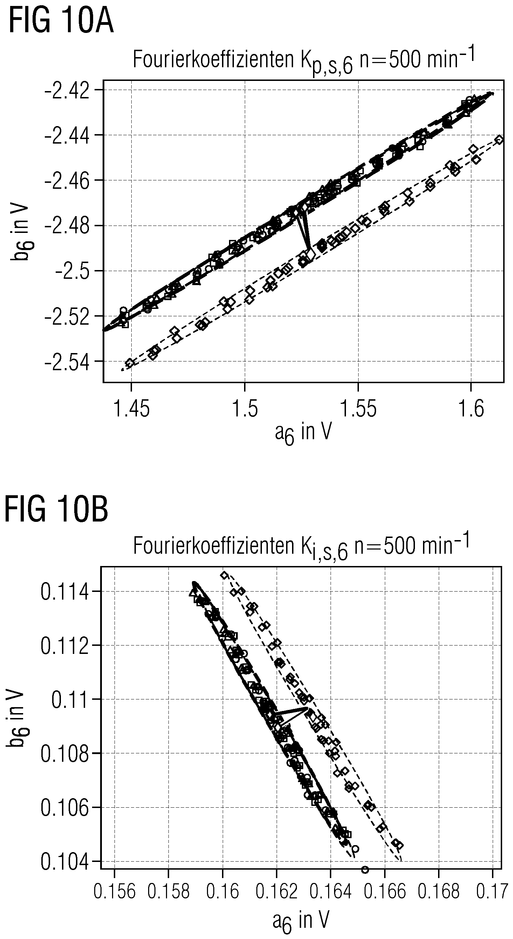

Fign. 10A und 10B zeigen exemplarische Ereigniswolken als Resultat einer Ausführung einer Frequenzanalyse.

In Analogie zu den Ausführungen zu Fign. 6-9 ergeben sich die Ereigniswolken aus einer Auftragung der Fourierkoeffizienten einer jeweiligen sechsten Harmonischen wie sie je durch Durchführen mehrerer Frequenzanalysen basierend auf mehreren erfassten Signalen erhalten wurde. Verhältnisbildung der Fourierkoeffizienten $b_6$ und $a_6$ kann auf eine Phasenlage geschlossen werden.

Ereigniswolke $E_1$ entspricht dabei dem als *"gesund"* anzusehenden Fall, d.h. einem Fall, in welchem keine wesentliche Degradation des betrachteten Stromrichters vorliegt.

Tritt eine Degradation des betrachteten Stromrichters ein, so kann eine Verschiebung der Amplituden der Fourierkoeffizienten erfolgen (absolut und/oder relativ zueinander), so dass sich bei Vorliegen eines Degradationsfort-schritts Ereigniswolken $E_2$, $E_3$ und $E_4$ ausbilden können, welche von Ereigniswolke $E_1$ verschieden sind. In dem dargestellten Beispiel würden Ereigniswolken $E_2$, $E_3$ und $E_4$ einen entsprechenden Fehlerzustand des Stromrichters anzeigen. Im vorliegenden Fall überlappen die Ereigniswolken $E_2$, $E_3$ und $E_4$.

In der vorliegenden Simulation wurde betrachtet, wie sich ein asymmetrischer Fehler (Schädigung nur in einer der drei Phasen u, v oder w) auf die 6. Harmonische auswirkt. Eine Änderung ist nachweisbar, jedoch ist die Änderung immer gleich - unabhängig von der geschädigten Phase. Daher kann aus dieser Änderung in der 6. Harmonischen nur allgemein auf einen Fehler geschlossen werden, für die genaue Lokalisation muss jedoch zusätzlich z.B. auf die Daten der 2. Harmonischen zurückgegriffen werden (Fig 8). In der 6. Harmonischen werden daher nur die "symmetrischen" Änderungen sichtbar, alle "Asymmetrien" werden in den Daten der 1. Und 2. Harmonischen sichtbar.

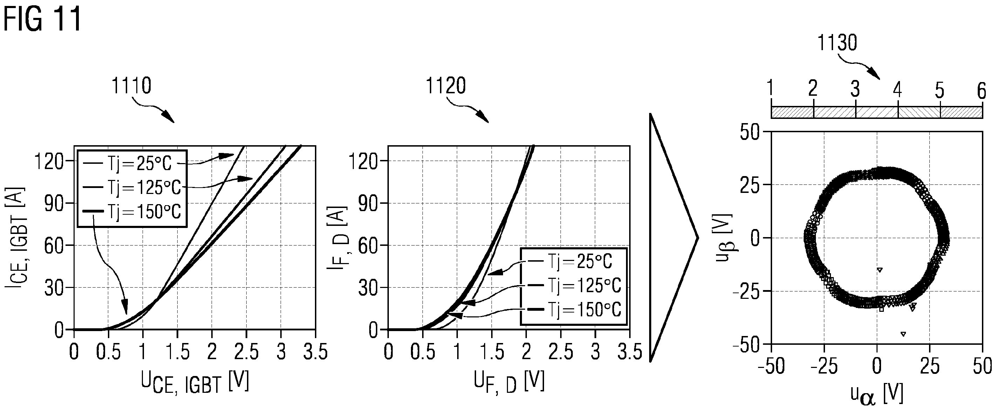

Fig. 11 zeigt exemplarische Strom-Spannungskennlinien 1110 für einen IGBT sowie Strom-Spannungskennlinien für eine Diode 1120 für verschiedene Chiptemperatur (25°C, 125°C sowie 150°C).

Hierbei zeigt sich, dass sich die Strom-Spannungskennlinien 1110 bzw. 1120 für verschiedene Chiptemperaturen ändert (z.B. verläuft diese für 25°C für eine Spannung von mehr als ca. 1,25 V bei einem IGBT steiler als die Strom-Spannungskennlinie bei 125°C und bei 150°C).

Bei einem Stromrichter mit zumindest sechs Halbleiterbauteilen, welche sequentiell beschaltet werden können, kann sich bei einer Darstellung der sequenziellen Schaltzustände in einem $\alpha\beta$-Diagramm eine asymmetrische Trajektorie ergeben, wenn sich eine Degradation an zumindest einem der Halbleiterbauteile des Stromrichters ergibt (was sich z.B. in einer Temperaturerhöhung des betreffenden Halbleiterbauteils manifestieren kann). Eine derartige verzerrte Trajektorie ist z.B. in $\alpha\beta$-Diagramm 1130 gezeigt.

Für alle zuvor genannten möglichen Implementierungen gilt, dass auftretende Fehler sowohl im Proportional- als auch im Integralanteil einer PI-Regelung sichtbar sein können. Geeignete Punkte zur Identifikation müssen im Vorfeld

# EP 4 701 064 A1

analysiert werden, da es auch nichtidentifizierbare Betriebspunkte geben kann. Neben der Amplitudenänderung gegenüber dem Ausgangszustand (Maß für die Schädigung), kann auch eine Phasenlage herangezogen werden, um den Fehler zu lokalisieren. Die Phasenlage der Phase U hängt von dem Betriebspunkt ab und kann aus der Frequenzanalyse herausgerechnet werden. Für jedes System kann es erforderlich sein, den Schwellwert in den Änderungen der Amplituden der Harmonischen im Vorfeld festzulegen bzw. zu analysieren, ab dem keine tolerierbare Alterung, sondern eine beginnende Schädigung auftritt.

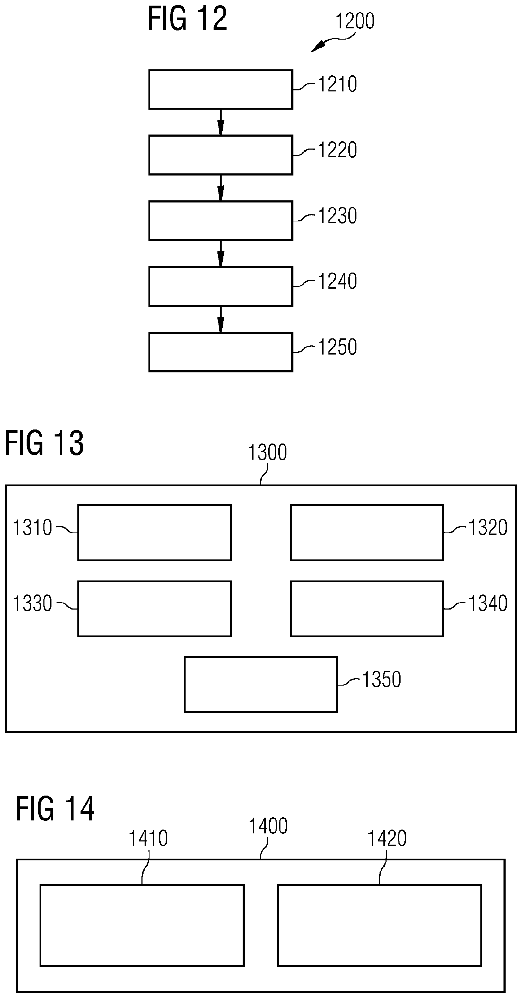

Fig. 12 zeigt ein Ablaufdiagramm eines exemplarischen Computer-implementierten Verfahrens 1300 zum Bestimmen eines Degradationsfortschritts eines Stromrichters gemäß einem Aspekt der vorliegenden Erfindung.

In Schritt 1210 erfolgt ein Erfassen eines zeitlichen Verlaufs eines Ausgangsstroms und/oder einer Ausgangsspannung des Stromrichters und/oder eines Proportional- und/oder Integralteils eines PI-Reglers, wobei der Ausgangsstrom und/oder die Ausgangsspannung zur Zuführung zu einem elektrischen Antriebsmittel bestimmt ist und/oder der PI-Regler zur Regelung des Ausgangsstroms und/oder der Ausgangsspannung des Stromrichters bestimmt ist.

In Schritt 1220 erfolgt ein Ausführen einer Frequenzanalyse und/oder einer Zeit-Frequenz-Analyse basierend auf dem erfassten zeitlichen Verlauf.

In Schritt 1230 erfolgt ein Bestimmen einer für den Degradationsfortschritt indikativen Amplitude einer höheren Harmonischen basierend auf der Frequenzanalyse und/oder einer für den Degradationsfortschritt indikativen Amplitude eines Frequenzbands basierend auf der Zeit-Frequenz-Analyse.

In Schritt 1240 erfolgt ein Vergleichen der bestimmten Amplitude mit einer für einen Degradationsfortschritt des Stromrichters indikativen Referenzamplitude.

In Schritt 1250 erfolgt ein Bestimmen des Degradationsfortschritts des Stromrichters basierend auf dem Vergleichen.

Fig. 13 zeigt eine exemplarische Computer-implementierte Vorrichtung 1300 zum Bestimmen eines Degradationsfortschritts eines Stromrichters gemäß einem Aspekt der vorliegenden Erfindung. Die Computer-implementierte Vorrichtung 1300 umfasst eine Erfassungseinheit 1310, eine Ausführungseinheit 1320, eine Bestimmungseinheit 1330, eine Vergleichseinheit 1440 sowie eine Bestimmungseinheit 1350.

Erfassungseinheit 1310 ist konfiguriert zum Erfassen eines zeitlichen Verlaufs eines Ausgangsstroms und/oder einer Ausgangsspannung des Stromrichters und/oder eines Proportional- und/oder Integral-teils eines PI-Reglers, wobei der Ausgangsstrom und/oder die Ausgangsspannung zur Zuführung zu einem elektrischen Antriebsmittel bestimmt ist und der PI-Regler zur Regelung des Ausgangsstroms und/oder der Ausgangsspannung des Stromrichters bestimmt ist.

Ausführungseinheit 1320 ist konfiguriert zum Ausführen einer Frequenzanalyse und/oder einer Zeit-Frequenz-Analyse basierend auf dem erfassten zeitlichen Verlauf.

Bestimmungseinheit 1330 ist konfiguriert zum Bestimmen einer für den Degradationsfortschritt indikativen Amplitude einer höheren Harmonischen basierend auf der Frequenzanalyse und/oder einer für den Degradationsfortschritt indikativen Amplitude eines Frequenzbands basierend auf der Zeit-Frequenz-Analyse.

Vergleichseinheit 1340 ist konfiguriert zum Vergleichen der bestimmten Amplitude mit einer für den Degradationsfortschritt des Stromrichters indikativen Referenzamplitude.

Bestimmungseinheit 1350 ist konfiguriert zum Bestimmen des Degradationsfortschritts des Stromrichters basierend auf dem Vergleichen.

Fig. 14 zeigt ein exemplarisches System 1400 zum Bestimmen eines Degradationsfortschritts eines Stromrichters gemäß einem Aspekt der vorliegenden Erfindung. Das System 1400 beinhaltet eine Computer-implementierte Vorrichtung 1410 und ein Computerprogrammprodukt 1420.

Die Computer-implementierte Vorrichtung 1410 kann konfiguriert sein wie hierin beschrieben.

Das Computerprogrammprodukt 1420 kann konfiguriert sein wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

## Patentansprüche

1. Computer-implementiertes Verfahren (1300) zum Bestimmen eines Degradationsfortschritts eines Stromrichters, umfassend:

   Erfassen (1310) eines zeitlichen Verlaufs eines Ausgangsstroms und/oder einer Ausgangsspannung des Stromrichters und/oder eines Proportional- und/oder Integralteils eines PI-Reglers, wobei der Ausgangsstrom und/oder die Ausgangsspannung zur Zuführung zu einem elektrischen Antriebsmittel bestimmt ist und/oder der PI-Regler zur Regelung des Ausgangsstroms und/oder der Ausgangsspannung des Stromrichters bestimmt ist;

13

Ausführen (1320) einer Frequenzanalyse und/oder einer Zeit-Frequenz-Analyse basierend auf dem erfassten zeitlichen Verlauf;

Bestimmen (1330) einer für den Degradationsfortschritt indikativen Amplitude einer höheren Harmonischen basierend auf der Frequenzanalyse und/oder einer für den Degradationsfortschritt indikativen Amplitude eines Frequenzbands basierend auf der Zeit-Frequenz-Analyse;

Vergleichen (1340) der bestimmten Amplitude mit einer für einen Degradationsfortschritt des Stromrichters indikativen Referenzamplitude;

Bestimmen (1350) des Degradationsfortschritts des Stromrichters basierend auf dem Vergleichen.

2. Computer-implementiertes Verfahren nach Anspruch 1, wobei das Ausführen der Frequenzanalyse ein Ausführen einer Fast Fourier Transform-, FFT-, Analyse umfasst.

3. Computer-implementiertes Verfahren nach einem der Ansprüche 1 oder 2, wobei das Bestimmen des Degradationsfortschritts ein Bestimmen umfasst, dass die bestimmte für den Degradationsfortschritt indikative Amplitude kleiner ist als die Referenzamplitude, bevorzugt um mehr als einen vorbestimmten Schwellenwert.

4. Computer-implementiertes Verfahren nach Anspruch 3, wobei der Schwellenwert zumindest teilweise auf historisch ermittelten Amplituden basiert, welche mit einer zu erwartenden Restlebenszeit des Stromrichters assoziiert sind.

5. Computer-implementiertes Verfahren nach einem der Ansprüche 1-4, wobei der Stromrichter ein 3-phasiger 2-Level oder ein 3-phasiger Multi-Level Wechselrichter ist.

6. Computer-implementiertes Verfahren nach einem der Ansprüche 1-5, wobei der Stromrichter zumindest ein Halbleitermodul, bevorzugt sechs Halbleitermodule umfasst, und wobei das zumindest eine Halbleitermodul bevorzugt ein Bipolartransistor mit isolierter Gate-Elektrode, IGBT, oder ein metal-oxide-semiconductor field-effect transistor, MOSFET, ist.

7. Computer-implementiertes Verfahren nach Anspruch 1-6, wobei der Stromrichter zumindest sechs Halbleitermodule umfasst, welche im Betrieb des Stromrichters in einer vordefinierten Zeitperiode seriell beschaltet werden und zu dem Ausgangsstrom und/oder der Ausgangsspannung beitragen.

8. Computer-implementiertes Verfahren nach Anspruch 7, wobei das Erfassen des zeitlichen Verlaufs ein Erfassen eines zeitlichen Verlaufs eines Ausgangsstroms und/oder einer Ausgangsspannung des Stromrichters und/oder eines Proportional- und/oder Integralteils eines PI-Reglers für jedes der zumindest sechs Halbleitermodule umfasst; und

wobei das Bestimmen der für den Degradationsfortschritt indikativen Amplitude ferner ein Bestimmen je einer Amplitude für jeden der zumindest sechs zeitlichen Verläufe umfasst; und

Bestimmen eines Degradationsfortschritts für zumindest eines der Halbleitermodule basierend auf dem Vergleichen..

9. Computer-implementiertes Verfahren nach Anspruch 8, wobei das Vergleichen der bestimmten Amplituden ein Bestimmen einer relativen Phasenlage der erfassten zeitlichen Verläufe für jedes der zumindest sechs Halbleitermodule umfasst.

10. Computer-implementiertes Verfahren nach einem der Ansprüche 1-9, wobei die Verfahrensschritte sequentiell und zyklisch ausgeführt werden, um eine zeitliche Entwicklung des Degradationsfortschritts zu bestimmen.

11. Computer-implementiertes Verfahren nach einem der Ansprüche 1-10, wobei der Ausgangsstrom ein Drehmoment- und/oder Magnetfeld-erzeugender Strom ist.

12. Computerprogrammprodukt, umfassend Befehle, die bei der Ausführung des Programms durch einen Computer diesen veranlassen, das Verfahren nach einem der Ansprüche 1-11 auszuführen.

13. Computer-implementierte Vorrichtung zum Bestimmen eines Degradationsfortschritts eines Stromrichters, umfassend:

Erfassungseinheit zum Erfassen eines zeitlichen Verlaufs eines Ausgangsstroms und/oder einer Ausgangsspannung des Stromrichters und/oder eines Proportional- und/oder Integralteils eines PI-Reglers, wobei der Ausgangsstrom und/oder die Ausgangsspannung zur Zuführung zu einem elektrischen Antriebsmittel bestimmt ist und der PI-Regler zur Regelung des Ausgangsstroms und/oder der Ausgangsspannung des Stromrichters bestimmt ist;

Ausführungseinheit zum Ausführen einer Frequenzanalyse und/oder einer Zeit-Frequenz-Analyse basierend auf dem erfassten zeitlichen Verlauf;

Bestimmungseinheit zum Bestimmen einer für den Degradationsfortschritt indikativen Amplitude einer höheren Harmonischen basierend auf der Frequenzanalyse und/oder einer für den Degradationsfortschritt indikativen Amplitude eines Frequenzbands basierend auf der Zeit-Frequenz-Analyse;

Vergleichseinheit zum Vergleichen der bestimmten Amplitude mit einer für einen Degradationsfortschritt des Stromrichters indikativen Referenzamplitude;

Bestimmungseinheit zum Bestimmen des Degradationsfortschritts des Stromrichters basierend auf dem Vergleichen.

14. Computer-implementierte Vorrichtung nach Anspruch 13, ferner umfassend:

eine Ausführungseinheit zum Ausführen des Computerprogrammprodukts nach Anspruch 12; und/oder
eine weitere Ausführungseinheit zum Ausführen des Verfahrens nach einem der Ansprüche 1-11.

15. System zum Bestimmen eines Degradationsfortschritts eines Stromrichters, umfassend:

Computerprogrammprodukt nach Anspruch 12; und
Computer-implementierte Vorrichtung nach einem der Ansprüche 13 oder 14.

## FIG 1A

100

110

119

111

113

BP

118

116  114  112  115

117

## FIG 1B

120

## FIG 1C

130

131

# FIG 2

EP 4 701 064 A1

## FIG 3

## FIG 4

FIG 5

## FIG 6A

Fourierkoeffizienten $K_{i,s,1}$ n=750 min$^{-1}$

$\times 10^{-3}$

b$_1$ in V

$E_3$

$E_1$

$E_4$

$E_2$

a$_1$ in V

$\times 10^{-3}$

## FIG 6B

Fourierkoeffizienten $K_{p,s,1}$ n=750 min$^{-1}$

$E_3$

$E_2$

$E_1$

$E_4$

b$_1$ in V

a$_1$ in V

# FIG 7A

$\times 10^{-3}$ Fourierkoeffizienten $K_{i,s,2}$ $n = 750$ min$^{-1}$

# FIG 7B

Fourierkoeffizienten $K_{p,s,2}$ $n = 500$ min$^{-1}$

## FIG 8A

Fourierkoeffizienten $K_{p,s,2}$ n=500 min$^{-1}$

## FIG 8B

$\times 10^{-3}$ Fourierkoeffizienten $K_{i,s,2}$ n=500 min$^{-1}$

## FIG 9A

Fourierkoeffizienten $K_{i,s,6}$ $n=500$ $min^{-1}$

## FIG 9B

Fourierkoeffizienten $K_{p,s,6}$ $n=500$ $min^{-1}$

## FIG 10A

Fourierkoeffizienten $K_{p,s,6}$ n=500 min$^{-1}$

## FIG 10B

Fourierkoeffizienten $K_{i,s,6}$ n=500 min$^{-1}$

# FIG 11

EP 4 701 064 A1

## FIG 12

1200

1210

1220

1230

1240

1250

## FIG 13

1300

1310

1320

1330

1340

1350

## FIG 14

1410    1400    1420

Europäisches
Patentamt

European
Patent Office

Office européen
des brevets

**EUROPÄISCHER RECHERCHENBERICHT**

Nummer der Anmeldung

EP 24 19 5578

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | VU HOANG-GIANG ET AL: "IGBT open-circuit fault detection for voltage source inverters using DC bus magnetic field signal", ELECTRICAL ENGINEERING, SPRINGER, BERLIN, DE, Bd. 103, Nr. 3, 10. Januar 2021 (2021-01-10), Seiten 1691-1700, XP037471790, ISSN: 0948-7921, DOI: 10.1007/S00202-020-01161-W [gefunden am 2021-01-10] * Seite 1691, Spalte 2; Abbildungen 2-7,9-13 * * Seite 1693, Spalte 2 * * Seite 1694, Spalte 2 * * Seite 1695, Spalte 1 * * Seite 1697, Spalte 1 * * Seite 1698, Spalte 1 * ----- | 1-15 | INV. H02M7/5387 H02M7/5395 H02M1/00 H02M1/32 |
| X | EP 1 298 511 A1 (RELIANCE ELECTRIC TECH [US]) 2. April 2003 (2003-04-02) * Absätze [0053], [0054]; Abbildungen 2a, 7, 14a-f, 27, 37, 38 * ----- | 1 | RECHERCHIERTE SACHGEBIETE (IPC) H02M |
| X | US 2019/285689 A1 (DEGRENNE NICOLAS [FR] ET AL) 19. September 2019 (2019-09-19) * Absätze [0107], [0116], [0153]; Abbildungen 1,7 * ----- | 1 | |
| X | US 12 050 242 B1 (KELLER ALEXANDER [US]) 30. Juli 2024 (2024-07-30) * Spalte 5, Zeilen 53-67; Abbildungen 3,5,6 * ----- -/-- | 1 | |

Der vorliegende Recherchenbericht wurde für alle Patentansprüche erstellt

| Recherchenort | Abschlußdatum der Recherche | Prüfer |
|---|---|---|
| Den Haag | 20. Januar 2025 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

**Nummer der Anmeldung**

EP 24 19 5578

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 116 298 651 A (YANGJIANG POWER SUPPLY BUREAU GUANGDONG POWER GRID CORP) 23. Juni 2023 (2023-06-23) * Zusammenfassung * ----- | 1 | |
| X | DOUZI SHAWKI ET AL: "Simulation of conducted EMI in SiC MOSFET buck converters before and after aging", 2017 INTERNATIONAL CONFERENCE ON INFORMATION AND DIGITAL TECHNOLOGIES (IDT), IEEE, 5. Juli 2017 (2017-07-05), Seiten 171-176, XP033143494, DOI: 10.1109/DT.2017.8012095 [gefunden am 2017-08-16] * Abbildungen 4,7 * ----- | 1 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 20. Januar 2025 | Kanelis, Konstantin |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 24 19 5578

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2025

| Im Recherchenbericht angeführtes Patentdokument | Datum der Veröffentlichung | Mitglied(er) der Patentfamilie | Datum der Veröffentlichung |
|---|---|---|---|
| EP 1298511 A1 | 02-04-2003 | DE 60203458 T2 | 15-09-2005 |
| | | EP 1298511 A1 | 02-04-2003 |
| US 2019285689 A1 | 19-09-2019 | CN 108603913 A | 28-09-2018 |
| | | EP 3203250 A1 | 09-08-2017 |
| | | JP 6615329 B2 | 04-12-2019 |
| | | JP 2018537061 A | 13-12-2018 |
| | | KR 20180098334 A | 03-09-2018 |
| | | US 2019285689 A1 | 19-09-2019 |
| | | WO 2017135333 A1 | 10-08-2017 |
| US 12050242 B1 | 30-07-2024 | US 12050242 B1 | 30-07-2024 |
| | | US 2024353463 A1 | 24-10-2024 |
| CN 116298651 A | 23-06-2023 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CIAPPA, M.** Selected failure mechanisms of modern power modules. *Microelectronics Reliability*, 2002, vol. 42 (4-5)